# EUROPEAN PATENT APPLICATION

(11) **EP 4 702 838 A1**
(43) Date of publication of application: **04.03.2026**
(21) Application number: 24796355.6
(22) Date of filing: 09.04.2024
(51) Int. Cl.: A01K 31/00, A01K 31/22

(54) **EXTENSION SYSTEM FOR AVIARIES**

(30) Priority: 28.04.2023 ES 202330337
(71) Applicant: Zucami Poultry Equipment, S.L.U., 31191 Beriain Navarra (ES)
(72) Inventor: HURTADO SALAGRE, Alvaro, 31191 BERIAIN (NAVARRA) (ES)
(74) Representative: Cabinet Beau de Loménie
(86) International application number: PCT/ES2024/070213
(87) International publication number: WO 2024/223964

(57) **Abstract**

The invention relates to a system for extending the useable surface of a multilevel aviary, which comprises at least one platform (100) comprising, in turn, support and retraction means suitable for positioning the platform (100) in the multilevel aviary such that, in an operative position, the platform becomes an extension of the floor of at least one level of the aviary and, in a retracted position, the corresponding access passageway of the multilevel aviary is empty. The invention also relates to a multilevel aviary comprising the extension system.

## Description

### Technical field

The present invention relates to the technical field of aviaries or poultry farms for laying birds. More particularly, the invention relates to systems for expanding or extending the surface available for said birds and to aviaries comprising systems of the aforementioned type.

### State of the art

The legal and regulatory setting with regard to livestock farming, and in particular laying birds, is changing in recent times in order to provide better housing conditions for the animals, in line with a more considerate view of the animals by humans. In line with this change in the legal framework, poultry farms for laying birds must also adapt their facilities, usually in terms of size and improvements in hygiene, feed and sanitary conditions. In relation to this, the European Union foresees the prohibition of battery cage farming by 2027, also prohibiting the so-called enriched colony cages, which correspond to cages with a larger surface area per bird and which also have added facilities inside the cage, such as perches, nesting area, and greater freedom of movement. It would therefore only be possible from that date onwards to keep hens in aviaries, also referred to as "cage free" or "free range" depending on whether or not the hens have access to the outside. In all cases, as the "number of hens per square metre" ratio decreases, farmers will be able to house a much smaller number of hens in the existing facilities. This evolution in legislation is not exclusive to the European Union, as, cage farming of hens in the United States of America is no longer allowed in several states and has a deadline in many others. This is the reason why farmers in these areas do not invest in new battery cage farms, but in cage-free or free-range aviaries. It is therefore necessary to design facilities or modifications to facilities that allow the number of housed birds to be increased, without changing location or enclosure, while complying with new standards as they arise.

These new installations or modifications, in addition to complying with the legislation in force at any given time, must meet a series of operational requirements for their proper operation and in relation to personnel access to the site:
- Chickens should be trained not to roost on the floor to avoid accumulation of manure. In the first few days after the birds are introduced, and in order for them to pick up the habit, the hens must be removed from the floor every night and placed on the slatted floors of the multilevel module itself so that the faeces can pass normally onto one or more conveyor belts.
- Sick or dead hens must be removed from the enclosure.
- Eggs laid outside the nest boxes must also be removed.
- Maintenance and cleaning tasks.

In order to meet these operational requirements, access passageways are necessary for the personnel responsible for these tasks.

The extension system of the invention and the poultry facility it comprises are aimed at eliminating the need for daily access by such personnel, and at incorporating new surfaces in these access passageways which are intended to provide an increase in the number of hens, compared to the same enclosure without the system of the invention, by more than 15% and with typical values in the order of 35%. This is in compliance with the "Council DIRECTIVE 1999/74/EC of 19 July 1999 laying down the minimum standards for the protection of laying hens", as well as the following guidelines in force in the United States:
- *Animal Welfare Standards for Laying Hens Cage-Free.* American Humane Certified (AHC),
- *Animal Husbandry Guidelines for U.S. Egg-Laying Flocks. Guidelines for Cage-Free Housing* de la United Egg Producers (UEP), and
- *Humane Farm Animal Care Standards for Egg Laying Hens.* Certified Humane (HFAC)

Related to this problem is the patent document US2019350173, which discloses a poultry facility with a floor on different levels to increase the space available for the hens; this additional floor consists of a mesh with a conveyor belt underneath, the latter being continuous and longitudinally moving the hens' manure to the end of the barn. However. this patent reflects the existence of permanent passageways for access by the service personnel of the facility.

The present invention proposes an alternative solution to the aforementioned disadvantages, increasing the useful surface by using the passageways and with the advantage of being applicable in a modular (customised) way in a large part of existing aviaries. In addition, due to the features described in detail below, it facilitates access for maintenance operators and farm personnel with very simple functional transformation operations. Furthermore, as is evident, the invention is also applicable in newly built facilities with additional details that shall be set out in later sections of this document.

### Object of the invention

For this purpose, the present invention relates to a system for extending the usable surface of a multilevel aviary. The extension system comprises at least one platform (for a corresponding longitudinal section of the level on which it is to be applied) and the platform includes support and retraction means that can support the platform in two stable positions; a so-called operative position, in which the platform becomes an extension of the floor of the corresponding level, and a retracted position, in which said extension is dispensed with and the access passageway is cleared for the passage of people, machinery, etc. In addition, these support and retraction means can move the platform between these two positions (retract or deploy it).

These support and retraction means, as their name indicates, have the dual function of supporting or holding the platform in a position such that the platform becomes an extension of the corresponding level and of retracting the platform from that operative position to a retracted or withdrawn position in which the passageway or walkway located next to each aviary module is free for the passage of maintenance and cleaning personnel (this action being reversible, that is, the platform can be returned to its operative position). This "extension" is understood to constitute an additional surface that is substantially coplanar and adjacent to the floor of the corresponding level. In other words, the levelness and adjacency of this platform with the floor of the level must be sufficient for the transit of the animals without risk to their integrity (so as not to fall, for example, onto the conveyor belts, or become caught in them, or with a sufficient separation so as not to impact against the floor and/or upper platform). Therefore, this platform may be slightly higher or lower, or with a smaller or larger horizontal separation, depending on specific design needs, without affecting the scope of protection of the claims, since from the point of view of the movement of the birds, it is still an extension.

The term "passageway" refers to the longitudinal space between the different multilevel modules for the transit of personnel or operators of the aviary.

According to another feature of the invention, the aforementioned platform comprises a mesh-type floor, suitable for letting the faeces of the birds pass through, preferably being galvanised metal mesh or plastic material, and the platform comprising a conveyor belt for said faeces located underneath the mesh for the transport of the poultry manure. The movement of said conveyor belt is transversal, that is, it is directed towards the usual main conveyor belt which is usually found on each level of the aviary and therefore drops said faeces onto the latter. This configuration allows individual platform sections to operate independently of each other, such that there is no need for a continuous conveyor belt throughout the entire building, which would be more costly and, in the event of a breakdown, would paralyse the entire belt and accumulate poultry manure.

The fact that each section of platform is individual and therefore limited in weight, means that the means necessary for the transition of the platform between the operative and retracted position are very simple and is carried out without any difficulty, even with manual force if necessary. **In** addition, each conveyor belt takes the poultry manure to the main conveyor belt in the modules of conventional aviaries.

In another feature of the system of the invention, the aforementioned support and retraction means can generate a movement between the two positions - operative and retracted - via a lifting movement of the platform or by a lowering movement of the platform via corresponding retraction means, which can have the lifting and lowering feature combined or the latter can be selected individually or can be separate means for each feature.

According to a further feature, the retraction drive means (which provide the movement of the platform between the two stable positions of the platform) can be either manually operated or motor-driven or can enjoy both options, combined or individually.

In accordance with another feature of the system, the support and retraction means comprise at least one winch with its associated transmission system, which may include one or more pulleys and one or more cables or ropes. **In** combination with the feature in the previous paragraph, it is understood that this winch may be operated manually and/or by means of one or more motors.

A further feature of the invention relates to a preferred embodiment in which the platform has a suitable slope for the movement, due to the action of gravity, of eggs falling onto it and in the direction of a main egg conveyor belt arranged for this purpose in the modules of the aviary, which is normally installed at each level of the aviary; or said eggs may reach suitable channelling means which guide them to a single main conveyor belt for all levels.

Thanks to this configuration, and preferably in combination with the features described above, the invention enables the automation of poultry facilities by minimising the need for operator assistance, who will simply enter for scheduled maintenance tasks.

In accordance with an additional feature of the system of the present invention, the platform may comprise one or more perches for the laying birds to climb on. These perches can also be assembled/disassembled with respect to the platform and, once assembled, can be folded, thereby being stowed in the platform.

Another feature of the system is that the drive means for the conveyor belt for the poultry manure collection from each platform can be common to several or all of the platforms installed in an aviary. Preferably this is achieved with a clutch that engages the transmission of the drive means of the conveyor belt with a continuous main drive, when the platform is deployed (in the operative position) and disengages this drive when the platform is stowed (in the retracted position).

Another aspect of the present invention contemplates a multilevel aviary comprising an extension system with any one or more of the features mentioned in the preceding paragraphs of this section, in different combinations.

According to a feature of this multilevel aviary, the manual drive means and/or motorised drive means, as well as the drive means of the conveyor belt of the platforms, are located at one of the heads of the multilevel aviary, thus facilitating access for service and maintenance personnel without having to enter the habitable areas of the animals, at least for an initial technical or maintenance assessment.

According to a feature of this aspect, the aviary comprising at least two rows of modules forming a passageway between the two rows, said passageway comprising platforms only on one side thereof, that is, on one of the rows of modules to facilitate access for personnel even without stowing the platforms, by leaving a small space between the platform and the adjacent row of modules in addition to "work spaces" without any kind of platform at a certain distance periodically.

According to another feature, the aviary comprises a plurality of extension systems on both sides of each module, and comprising manual and/or automatic control means that allow the platform to be withdrawn individually as required. **In** this way, if the operator must enter, they can withdraw the platforms they need as they pass through, while the rest of the platforms are in their operative position.

Lastly, according to another feature of this aspect, at least one of the access passageways comprises a litter conveyor belt. Litter is understood as the bedding that usually covers the floor of the farm, being any material with a friable texture that allows the hens to meet their ethological needs. Said litter must provide comfort for the birds by modifying the characteristics of the floor: hardness, conductivity, humidity, etc., and by preventing droppings from adhering to the floor. Current regulations require at least a certain percentage of the usable surface to be covered by litter. For example, according to Royal Decree 3/2002 of 11 January, facilities must have at least 250 cm2 of litter surface per hen, with the litter occupying at least one third of the floor surface.

The conveyor belt makes it possible to renew the litter by automating the facility to avoid the need for manual replenishment. Thus, the conveyor belt collects new litter material from one end of the passageway and, once it has completed its temporary cycle within the enclosure, tips it into a scoop, pit or any type of container for disposal or recycling.

### Description of the figures

The following figures show representative drawings of the present invention which, together with the description, will help the interpretation of the scope of the claims. In said drawings:
Figure 1 is a perspective view of a typical aviary for laying birds and includes an extension system of the present invention.
Figure 2 is another perspective view of the aviary shown in Figure 1, focussed on one of the multilevel modules thereof.
Figure 3 is another perspective view of one of the aviary modules of the previous figures, this time showing one side of said module.
Figure 4 is an upper view of the aviary of Figure 1.
Figures 5.1, 5.2 show two representations of a multilevel aviary, with the system of the invention installed, from the front or head portion, and in a configuration with all the platforms of the system deployed and another with all the platforms stowed by means of a folding movement.
Figures 5.3 and 5.4 represent other possible options for stowing the platforms either by a lifting movement or by concealing them at ground level of the building.
Figure 5.5, shows a representation of the aviary with the platforms alternately stowed.
Figure 6 shows an alternative embodiment of the invention with platforms on only one side of the module.
Figures 7.1, 7.2 show an alternative embodiment of the invention. The system of the invention has been installed in such a way as to allow personnel access even without stowing the platforms, by leaving a small space between the platform and the adjoining row of modules as well as "work spaces" without any kind of platform at a certain distance periodically.
Figure 8.1, 8.2 show an alternative embodiment of the invention like that of Figures 7.1, 7.2 but for a different configuration of the module installations.

### Detailed description of the invention

Embodiments of the extension system of the present invention will be described below with greater attention to detail and in relation to the figures listed above.

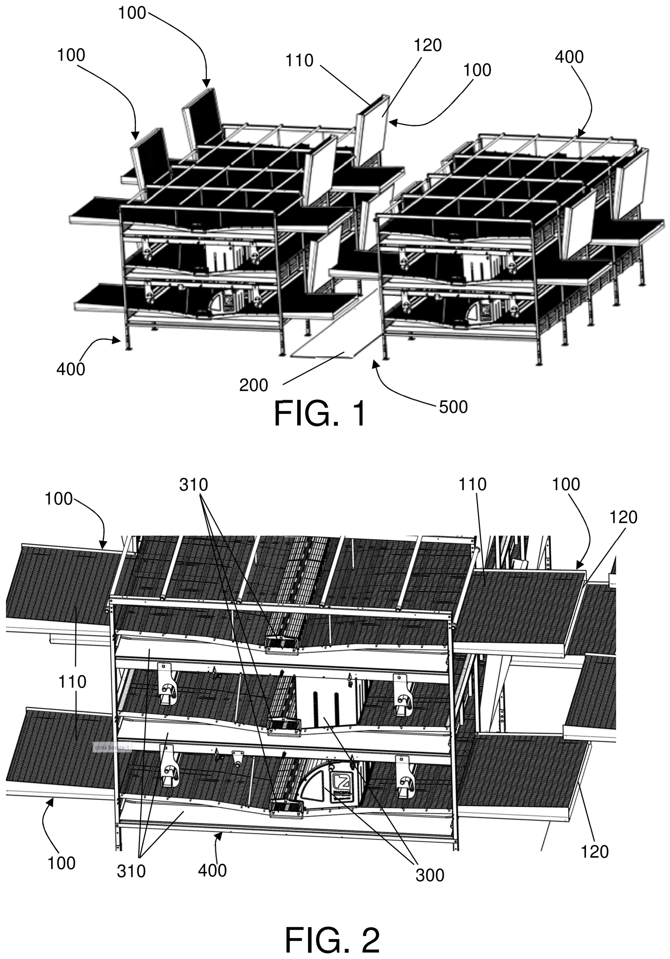

Figure 1 shows a perspective view of a multilevel aviary according to a practical embodiment of the invention with two modules (400) installed forming two rows so as to leave an access passageway (500) or walkway therebetween, in addition to side access passageways that are formed between the wall of the barn and the module (400).

In each of the modules (400), three levels can be seen with their corresponding equipment (nest boxes, feeders, drinkers, etc.) designed to create suitable living conditions for the laying birds. In addition, an extension system according to the invention is installed in these modules (400) (which are of a type that is widespread in this sector), which can be a completely new facility or an adaptation of existing ones. Each of the installed systems comprises at least one (usually several) extension platform (100), the main feature of which is that it can be positioned in two stable orientations.

In the module (400) on the left, the platforms (100) have been installed on the upper and lower level, while in the module (400) on the right, the system has only been installed on the intermediate level. In relation to the above-mentioned stable orientations, it can be seen -on any of the aviary levels- how they are illustrated, in this case, alternating, that is, one platform (100) stowed and the adjacent one deployed.

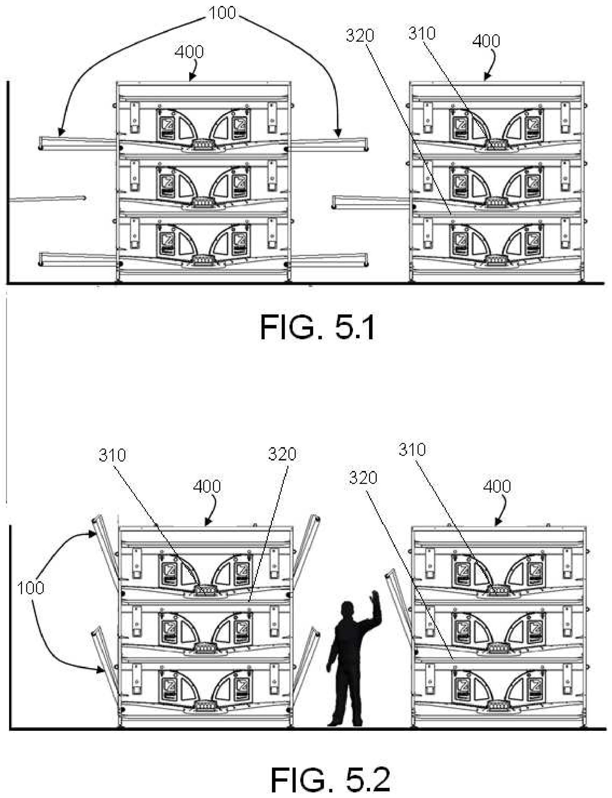

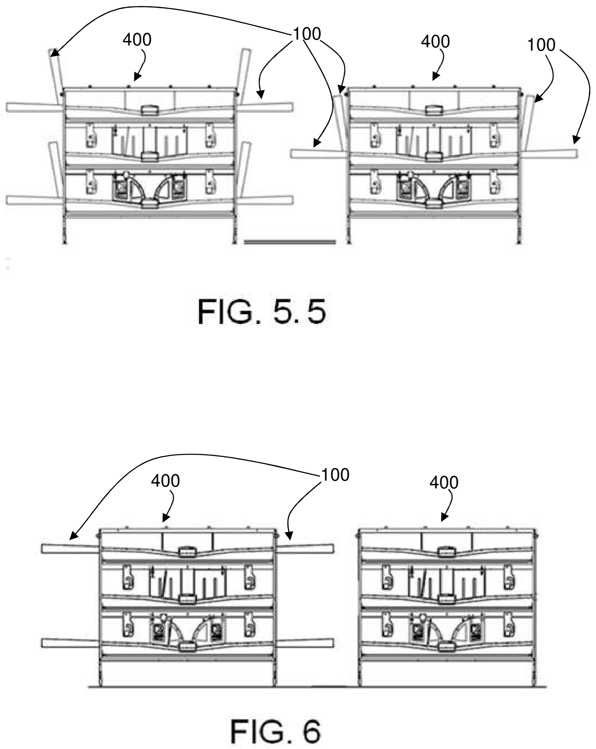

In the deployed or operative position, the platform (100) consists of an extension or prolongation of the floor of the corresponding level on which it is installed, such that birds can move on it in the same way as they would move on the floor. In the stowed or retracted position, the platforms (100) clear the space corresponding to the access passageway or walkway so that it is accessible to aviary personnel or other operators who must perform technical maintenance of the installed equipment. Said operative and retracted positions are achieved via support and retraction means, which are described more specifically in later paragraphs. In addition, the facility will include control means to establish the positioning of each platform according to the requirements, and this retraction movement of the platforms (100) can also be performed manually by the operator themselves when they enters for maintenance work. Figure 5.1 shows a schematic representation with all the platforms (100) of a deployed passageway, and in Figure 5.2 with all the platforms (100) stowed to allow the aforementioned access of the operator, although it could well be a section of the facility in which this operator is working, leaving the rest of the platforms (100) in the deployed operative position.

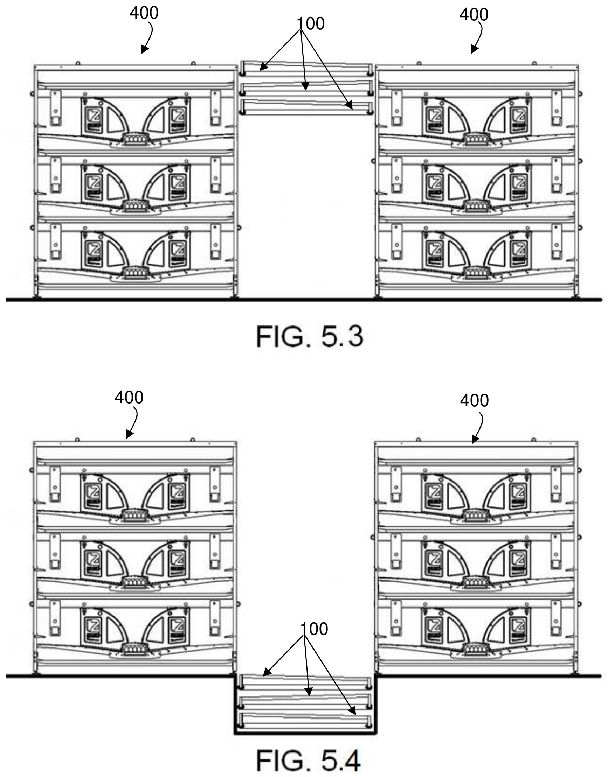

It must be noted that the chosen retraction mechanism of the support and retraction means for its representation in the figures is based on a retraction by folding (in this case articulated with respect to the connection of the platform (100) to the floor of the corresponding level) but, as stated in the claims, this mechanism could also be based, for example, on a lifting system for lifting said platforms (100) as represented in Figures 5.3 and 5.4. Specifically, a winch system is provided with a series of pulleys and corresponding cables that would be connected to the platforms (100) to be folded or raised by means of the respective winch drive. These pulleys and cables would be installed in the structure of the aviary and/or the enclosure housing the aviary along suitable routes that can be deduced by people skilled in the art (roof of the enclosure, support structures of the aviary, etc.). It is also envisaged that the retraction drive means (and deployment) of the platforms (100) may be motorised or may be manual or a combination of both options. For example, in the case of the winch, it can be operated manually or by a motor.

In a variant of the embodiment corresponding to the system with retraction means by folding, these comprise a hinged connection of the platform (100) to the floor of the corresponding level, for example in the form of some kind of hinge along part or all of the edge of the platform (100) adjacent to the floor of the level, also with the possibility of including reinforcement elements which may extend along said platform (100) and/or said floor to give firmness to this hinged connection. Furthermore, the drive means of these retraction means may comprise motors connected to an axial transmission system, of the aviary or common to the platforms of the extension system, passing through the aforementioned articulated connection and causing the platforms (100) to fold or deploy.

Preferably, these retraction drive means (so called for short but which also generate the deployment movement of the platforms (100)) are common for several of the platforms (100), more preferably, for all the platforms (100) of one side of a given level. Retraction drive systems may also be provided that are common, by means of suitable mechanical and/or electrical transmissions, for a whole level or for an entire module (400).

In one of the preferred embodiments, the platform (100) includes a floor surface (110), preferably made of mesh, more preferably made of galvanised metal mesh or plastic material (although the use of other materials is not excluded), and comprises, underneath the same, a conveyor belt (120) to move the poultry manure that falls on it towards the main waste conveyor belt (320) that this type of aviary normally includes. In this way, the floor surface (110) can be included as usable floor surface for the benefit of compliance with existing and future regulations mentioned at the beginning of this specification.

Typically, the aforementioned main waste conveyor belt (320) runs longitudinally parallel to the access passageway and the conveyor belt (120) moves transversely with respect to this direction. Advantageously, the conveyor belt drive means are common to several of the platforms (100), thereby facilitating the maintenance of the enclosure. This can be achieved for example by a clutch system whereby, when the platforms (100) are in the operative or deployed position, the conveyor belt drive means will engage or couple with the conveyor belt (120) (more specifically with its roller or other drive mechanism) and, when the platforms (100) are in their stowed or retracted position, the conveyor belt drive means will disengage from the conveyor drive mechanism.

Preferably, all retraction drive and conveyor belt drive means are located at the heads (300) of the modules (400) in order to make servicing, maintenance and possible repair easier for the corresponding operators. They may also include protective housings or cases which may be watertight or airtight against the various fluids and gases generated in such enclosures. According to another variant of this preferred embodiment, the housing comprises anti-vandalism features. This housing can, of course, be removed to allow access to and maintenance of the above-mentioned drive components. The housing can also be, for example, transparent or translucent, at least in part, for quick inspection of the interior. All these technical features can be applied individually or in any combination in the extension system.

The support and retraction means of the platforms (100) may comprise accessory components to provide additional firmness or stability with respect to the module (400). For example, in the event that said support and retraction means are carried out by means of an articulation with the floor of the corresponding level, locks or retaining elements could be provided to prevent the platforms (100) from being folded (to avoid accidents with operators or damage in the event that birds are scattered in this area). In the case where the support and retraction means are provided by means of cables and pulleys (retraction by lifting), they could comprise additional securing elements with respect to the floor of the corresponding level, in the form of sliding or deployable struts or crosspieces that would act as reinforcement at the platform (100)-floor level connection; they could also include locking devices as in the previous case.

Another preferred feature of these platforms (100) is that they have a suitable slope to transport the eggs that fall on them in the direction of the main egg conveyor belt (310) that these aviaries normally comprise.

According to the embodiment of figures 1 to 7, said main egg conveyor belt (310) is arranged in the central portion of the aviary.

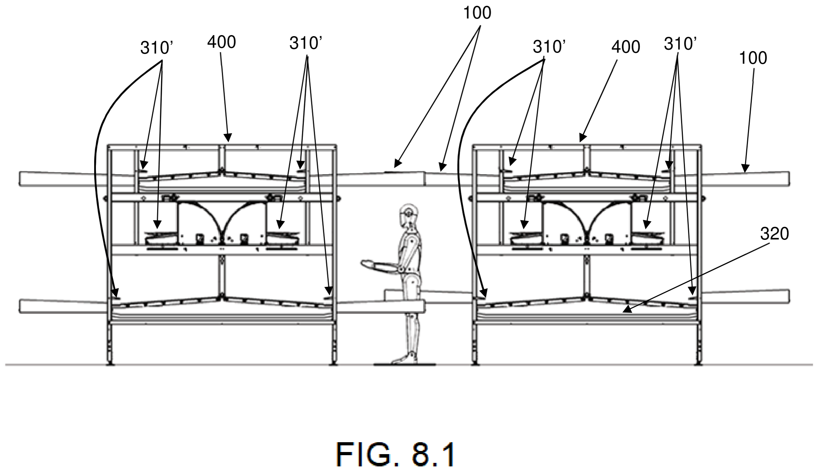

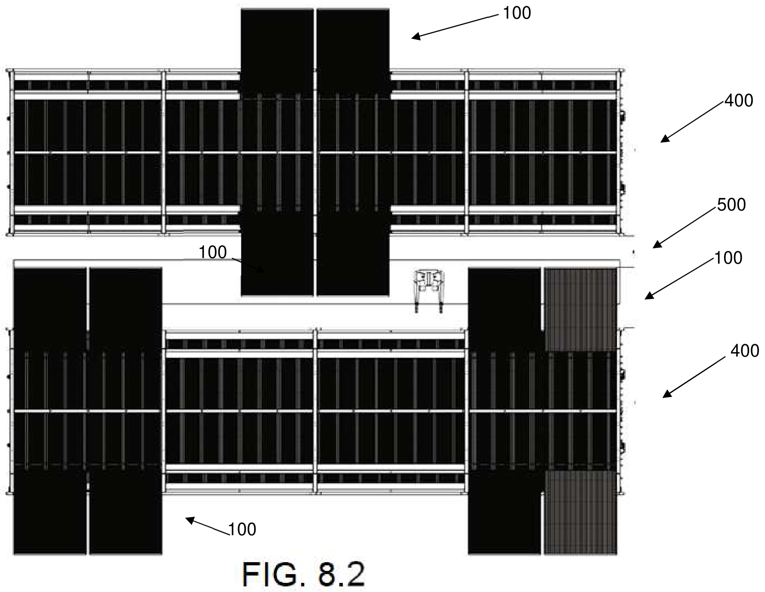

According to another embodiment of the invention, as can be seen in Figures 8.1, 8.2, the module (400) has an alternative configuration in which the eggs in the module (400) fall to the sides where they are collected by main egg conveyor belts (310'). In this case, the eggs roll on the platforms (100) to said side belts (310') instead of to a central main belt (310), without altering the configuration of the platforms (100).

It is also envisaged that the platforms (100) may comprise one or more perches of the type normally used in these aviaries for hens or laying birds to perch on. Said perches can be detachable to be arranged in different positions on a platform (100) or simply stored for future use or for cleaning or replacement and can also be foldable, being stowed parallel to the surface of the platform (100).

In one preferred embodiment, the length of each platform (100), in the direction of the corresponding access passageway, is between 1 and 2 metres, preferably approximately 1.4 metres.

According to a practical example, the passageway (500) preferably has a dimension of 2 metres, the dimension of the platform (100) being 1.5 metres. In other words, at least half a metre of adequate space is left for the hens to pass through.

This configuration is essential to ensure that all hens have access to the litter.

According to another embodiment, if the extension platform (100) of one module (400) is to be supported on the opposite module (400), the length of the platform (100) shall be shorter than the length of the module (400) such that there is space in terms of height for the passage of hens between consecutive modules (400).

Lastly, another aspect of the invention relates to an aviary comprising an extension system that includes one or more of the features disclosed above.

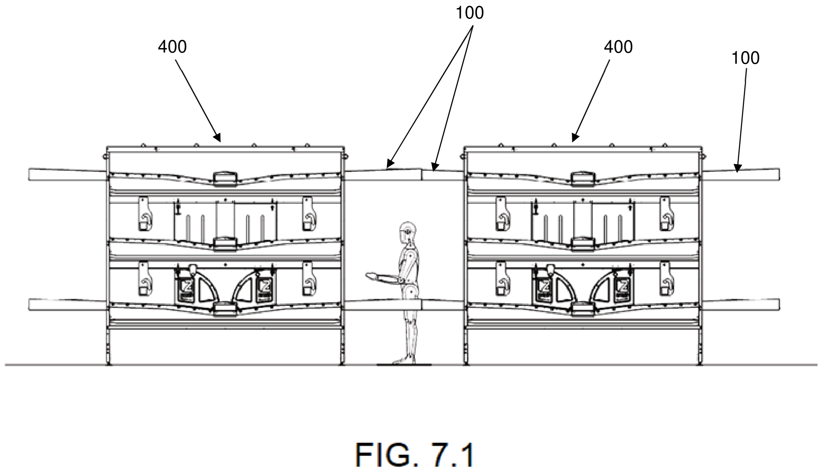

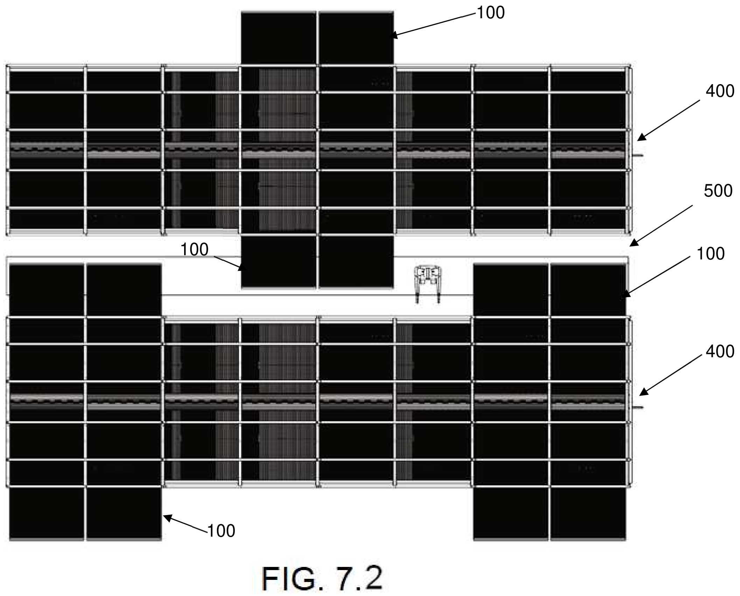

In one of the preferred embodiments of this aviary, the extension system is installed only on one side of one or more of the access passageways, leaving a space between the deployed platform (100) and the module (400) of an adjoining row of modules as can be seen in the configuration of Figures 7.1 and 7.2, to facilitate easy access by the corresponding personnel in case of emergency without the need to retract the platforms (100). The configuration shown in Figures 7.1, 7.2 comprises platforms (100) on the upper and lower levels leaving the intermediate level free, unlike the configuration shown in Figures 5.1, 5.2, 5.3 where the platforms (100) are arranged in a staggered arrangement, as the platforms (100) can be withdrawn alternately and individually on the same floor.

According to an alternative embodiment of the invention, as can be seen in Figure 6, the platforms (100) are installed in a single module (400). All these configurations according to the practical examples described demonstrate the versatility of the system.

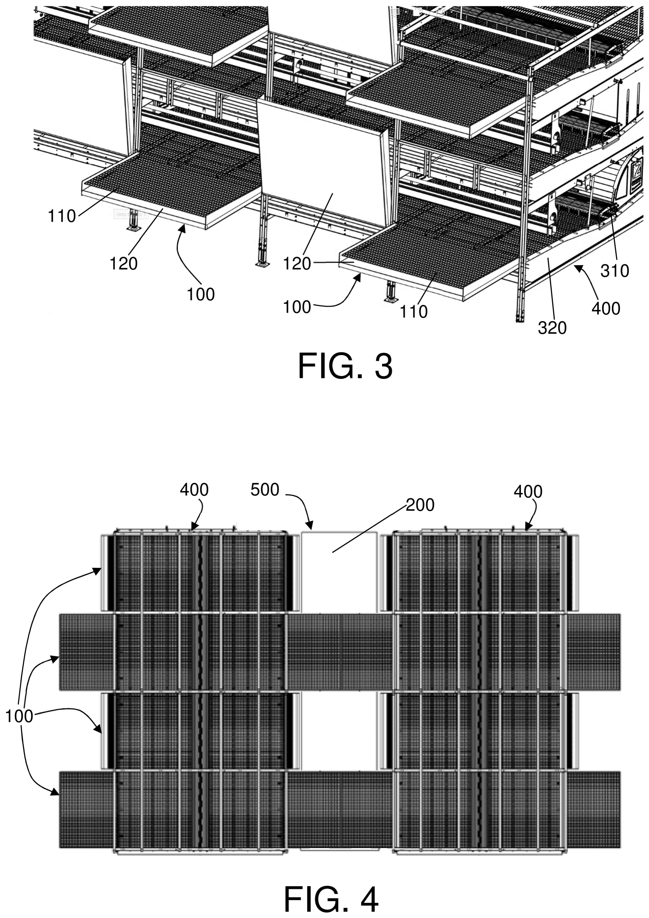

In a preferred embodiment of the aviary of the invention, the aviary will comprise a litter conveyor belt (200) (as can be seen in Figures 1 and 4) arranged to transport the litter material throughout the enclosure and within a period of time that can be set by the aviary manager. Said belt (200) collects, by means of a dispenser, new litter material at the start of its path (near one of the heads (300) of the modules (400) for example) and pours it (as used material for disposal) at the other end of the belt (200) into a pit or container intended for that purpose. This conveyor belt (200) is designed to withstand the weight and transit of people and its speed is preferably practically imperceptible to humans and laying hens as it completes the path of the aviary in, for example, 1 to 3 days (other suitable periods can be set).

It is also envisaged that the aviary comprises sensors connected to a PLC system for monitoring levels of feed, water, egg laying, levels of certain gases that may be harmful to the animals (and humans), etc. These sensors provide parameters indicative of situations that, in some cases, can also be resolved automatically (such as automated dispensers when a lack of feed or water is detected) and, in others, a warning can be given for monitoring by robots and/or human personnel. **In** the case of robots, they can perform many of the tasks currently assigned to humans, such as the automatic removal of dead animals (which is unavoidable despite improved living conditions), or other types of tasks controlled by a computerised control centre, in combination with vision systems incorporated in the robots themselves and distributed throughout the enclosure. **In** combination with the features of the aforementioned system (inter alia, self-cleaning by poultry manure conveyor belts, automated litter dispensing and renewal, guiding the eggs to their central collection area, external and centralised control of the drive of the extension platforms), this minimises the number of times that service personnel have to enter the enclosure and allows them to devote their time to other tasks in the facility.

Based on the features described, it is possible to observe the adaptability of the extension system of the invention to different types of multilevel aviary (due to its support and retraction systems that are suitable for these structures), the versatility it offers in terms of the square metres selectable as useful surface area for the laying birds (with the selection of the same by sections or platforms (100)) and the saving of time spent by the personnel employed in tasks related to cleaning and maintaining the enclosure.

## Claims

1. A system for extending the useable surface of a multilevel aviary, which comprises at least one platform (100) comprising, in turn, support and retraction means suitable for positioning the platform (100) in the multilevel aviary such that, in an operative position, the platform becomes an extension of the floor of at least one level of the aviary and, in a retracted position, the corresponding access passageway of the multilevel aviary is cleared.

2. The extension system according to claim 1, wherein the platform (100) comprises a mesh-type floor surface (110) and a conveyor belt (120) under said floor surface (110), said conveyor belt (120) comprising corresponding conveyor belt drive means and moving in the direction of the multilevel aviary to which the platform (100) is fastened.

3. The extension system according to any of the preceding claims, wherein the support and retraction means comprise retraction means by lifting and/or retraction means by folding said platform (100).

4. The extension system according to any of the preceding claims, wherein the support and retraction means comprise manual retraction drive means and/or motorised retraction drive means.

5. The extension system according to any of claims 3 to 4, wherein the support and retraction means comprise at least one winch with a corresponding pulley and cable system.

6. The extension system according to any of the preceding claims, wherein the platform (100), in its operative position, has a downward slope towards the multilevel aviary to which the platform (100) is fastened.

7. The extension system according to any of the preceding claims, wherein the platform (100) in turn comprises at least one perch that is detachable and/or foldable with respect to the platform (100).

8. The extension system according to any of the preceding claims, wherein the conveyor belt drive means corresponding to the conveyor belt (120) are common to more than one of the platforms (100).

9. The extension system according to the preceding claim, wherein at least one of the conveyor belts (120) comprises a clutch system suitable for being engaged with the conveyor belt drive means in the operative position of the platform(s) and disengaged in a retracted position.

10. A multilevel aviary comprising an extension system according to any of the preceding claims, comprising at least one multilevel module (400) with corresponding heads (300), said heads (300) comprising an egg conveyor belt (310) and a main poultry manure conveyor belt (320) arranged along the length of the aviary, moving in the longitudinal direction of the multilevel aviary.

11. The multilevel aviary according to the preceding claim, wherein the manual retraction drive means and/or the motorised retraction drive means and/or the conveyor belt drive means are located at the heads (300) of the multilevel aviary.

12. The multilevel aviary according to the preceding claim, comprising at least two rows of modules (400) forming a passageway (500) between the two rows, the passageway (500) comprising platforms (100) on only one side thereof.

13. The multilevel aviary according to claim 10, comprising at least two rows of modules (400) forming a passageway (500) between the two rows and/or with the wall of the barn, comprising on both sides of each module (400) a plurality of extension systems according to any one of claims 1 to 9, and with control means that independently withdraw the platform (100) as required.

14. The multilevel aviary according to any of claims 10 to 11, wherein at least one of the access passageways comprises a litter conveyor belt (200) comprising, in turn, a litter dispenser at the initial end thereof and a used litter receiver at the other end thereof.
